# EUROPEAN PATENT SPECIFICATION

(11) **EP 3 179 322 B1**
(45) Date of publication and mention of the grant of the patent: **06.03.2019**
(21) Application number: 16203118.1
(22) Date of filing: 09.12.2016
(51) Int. Cl.: G06F 21/56, G05B 19/042, G05B 19/05

(54) **A METHOD AND SYSTEM FOR DETECTING ATTEMPTED MALICIOUS RE-PROGRAMMING OF A PLC IN SCADA SYSTEMS**
VERFAHREN UND SYSTEM ZUR DETEKTION VON BÖSARTIGER NEUPROGRAMMIERUNG EINES PLC IN SCADA-SYSTEMEN
PROCÉDÉ ET SYSTÈME PERMETTANT DE DÉTECTER UNE TENTATIVE DE REPROGRAMMATION MALVEILLANTE DE PLC DANS DES SYSTÈMES SCADA

(30) Priority: 10.12.2015 IL 24302515
(43) Date of publication of application: 14.06.2017
(73) Proprietor: Deutsche Telekom AG, 53113 Bonn (DE)
(72) Inventor: Shabtai, Asaf, 7684200 Hulda (IL); Puzis, Rami, 7748707 Ashdod (IL); Silberschlag, Shimon, 7175995 Modiin (IL); Roshandel, Mehran, 13591 Berlin (DE)
(74) Representative: Hoeger, Stellrecht & Partner Patentanwälte mbB

(56) References cited:
- WO-A1-2006/131124
- WO-A1-2015/136972
- GB-A- 2 491 237
- JP-A- 2008 065 678
- US-A1- 2013 245 792
- US-A1- 2015 271 161

## Description

### Field of the Invention

The invention is from the field of Supervisory Control And Data Acquisition (SCADA) systems. Specifically the invention relates to a method and system for detecting unauthorized re-programming of a Programmable Logic Controller (PLC) in a SCADA system.

### Background of the Invention

Supervisory Control and Data Acquisition (SCADA) systems are responsible for monitoring, managing and controlling the safe and efficient operation of systems responsible for basic infrastructure and industrial enterprises such as electricity, oil, and gas production and distribution, water distribution, water and a sewage treatment, chemical processes, traffic control, railroad signal light control, airport operations, food production, and controlling and monitoring systems such as lighting, heating, air conditioning, and elevators in buildings.

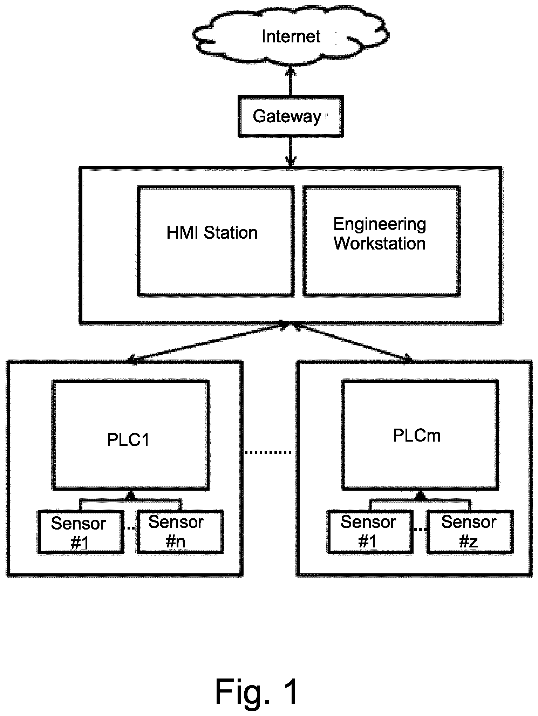

The basic architecture of SCADA systems is shown in Fig. 1. A SCDA system comprises the following main components:
- Human Machine Interface (HMI) -- A HMI is a workstation used by SCADA operators for the day to day operation and monitoring of the system. This workstation can be used to change setpoints (controlled values), stop or shutdown operation of one or more physical devices or the entire system, etc.
- Programmable Logic Controller (PLC) - A PLC is a small embedded microcomputer that can be programmed to control one or more physical devices.
- Remote Terminal Unit (RTU) - A RTU is a simpler, older form of PLC, used mainly for telemetry where no physical actuation of devices is needed.
- Engineering workstation - This is a workstation dedicated to programming the PLC devices used in the system. Re-programming the PLC can completely alter the behavior of the system. Doing so without the operators knowledge may put in jeopardy the system and the machines it controls.
- Historian - This is a dedicated server used to record all the timestamped activity in the system.

There are many differences between modern information technology (IT) systems and SCADA systems. The most relevant ones within the context of security are:
- Modern vs. Old - Most modern IT systems have a life cycle of several years, after which they undergo upgrades and improvements. By contrast, most SCADA systems have lifecycles of 20-30 years, because of costs and reliability considerations. This means that current production systems might have been planned and manufactured when the Internet was at infancy.
- Concentrated vs. Distributed - Most modern IT systems are located in special areas called Data Centers or Server Farms. SCADA systems on the other hand can be located almost anywhere, from deserts to the middle of the ocean, with various wire and wireless means of communication. This fact alone makes changing these systems prohibitively expensive.
- Patches - Most IT enterprises have learned to incorporate patch cycles, where they upgrade their systems for handling security vulnerabilities that have been found. By contrast, many SCADA operators don't upgrade their setups at all, because they either can't afford the downtime, or simply don't want to mess with a reliable system they currently use.

- Modern approach to security - Many IT systems have incorporated security measures, especially traffic control, encryption and authentication. Most SCADA systems do not use any such measures, usually because they are not supported or for reliability concerns. "Reliability first" means that the operators are anxious about any components that are not directly related to the smooth operation of the network and/or the systems, especially those that have pure security value and might prevent proper and immediate control of the system in an emergency.

Most security breaches we read about daily are focused around stealing information of various kinds - credit card numbers, personally identifiable information (PII), trade secrets, engineering plans, national security info etc. Those attacks are known in military parlance as CNE - Computer Network Exploitation. This means that in many IT networks, confidentiality of the information on the network is paramount, and the operators top security priority is to support it. On the other hand, SCADA networks usually don't contain any secrets, and the main concern for the operators is the reliability of the system - its integrity and availability. Attacks against such systems will try to hurt the capability of the operators to monitor and control it, and may even try to physically hurt the actual machines controlled by the system. These attacks are known as CNA - Computer Network Attack.

The following are the main security issues with current SCADA systems:
- Internet connectivity - As shown in Fig. 1, many SCADA operators have connected their networks to the Internet or to Internet connected networks for efficiency's sake or maintenance consideration. But the security model for these SCADA networks was that of a standalone, unconnected network, and they are not prepared for the kind of threats that the modern Internet brings with it.
- Flat network design - The networks used are usually "flat", which means no segmentation or traffic control is used, for simplicity and reliability. The result is systems that the attacker has only to gain access to; when he is inside the network, the game is over for the defender.
- No/limited implementation of security measures - As mentioned earlier, operators shun any equipment not directly responsible for operation of the systems, mainly because of reliability and economic considerations.

The main targets of attack in SCADA systems are the Programmable Logic Controller (PLCs), which are embedded microcomputers that can be programmed to control physical devices in SCADA systems. They receive information (e.g., status) from physical devices and forward the information to the operator, forward commands, sent by the operator via the Human-Machine Interface (HMI), to the physical devices, and can be reprogrammed through the Engineering Workstation (EWS).

Existing threats to the PLC's are:
- maliciously re-programing a PLC in order to gain full control on the PLC;
- manipulating information provided by the PLC;
- sending false/malicious commands to the physical devices (e.g., stopping a turbine).

Many attacks against SCADA systems have been made public in the past. Unfortunately, in most cases the description of the attack is vague, with little or no technical details to help the security community understand the attacker's approach and devise specific countermeasures. One distinct exception to this rule is the attack known as STUXNET.

This attack was conducted against Iran's nuclear program, specifically against the Uranium enrichment facilities in Natanz. This attack was meticulously documented by experts, including the Langner Group from Germany and Symantec.

In many ways, this attack was the first of its kind - it tried to destroy the actual centrifuges connected to the control systems. It also used the very first known rootkit on the control system PLC. The attack vector was the engineering workstation. The attackers gained access to the engineering workstation and used it to change the programming of the PLC controlling the centrifuges. The rootkit functionality of the attack was used to hide these changes from the operators using the HMI or engineering workstation.

As this is a very powerful attack vector which upon successful reprogramming of the PLC allows the attacker full control over the system and also can dictate the level of visibility for the SCADA system operators (via the HMI), a proper security solution is necessary.

It is therefore a purpose of the present invention to provide a system that allows operators to detect and prevent malicious re-programming of PLCs in SCADA systems.

JP 2008/065678 A discloses a system and method for detecting attempts to maliciously reprogram a PLC. Programming files to be sent to the PLC are encoded by an encryption conversion unit, which transmits the encrypted program to the PLC via the internet. The PLC checks whether the received program is unique to the equipment and decodes the encrypted program according to an encryption rule based on data relative to the equipment that was previously used by the encryption conversion unit. The PLC then verifies if the encrypted file is a valid programming file by comparing the encryption rules.

WO 2015/136972 A1 discloses a system and method for detecting attempts to maliciously reprogram a PLC for systems in which there is no communication channel between the station that prepares a programming file and a PLC. In the system of this application, a memory card containing a software ID, a storage medium ID, and encrypted information formed by encrypting the software ID with the storage medium ID as a key. The memory card is physically delivered to the PLC where the information on it is validated by using the storage medium ID as a key to decrypt the encrypted information thereby obtaining a software ID that is compared with the software ID on the memory card.

Further purposes and advantages of this invention will appear as the description proceeds.

### Summary of the Invention

The invention is a method according to independent claim 1 and a system according to independent claim 6.

If the software in the proxy module determines that the cryptographic signature received from the CM matches the programming file sent from the EWS, then the programming file is not malicious and the proxy module transmits the programming file to the PLC.

If the software in the proxy module determines that the cryptographic signature received from the CM does not match the programming file sent from the EWS, then the programming file is malicious and the proxy module does not transmit the programming file to the PLC.

An embodiment of the method of the invention comprises the additional step of connecting a PLC honeypot via a communication line directly to the protection proxy module. In this embodiment, if the software in the proxy module determines that the cryptographic signature received from the CM does not match the programming file sent from the EWS, then the programming file is malicious and the proxy module transmits the programming file to the PLC honeypot for further monitoring, forensic data collection, and expert examination.

An embodiment of the system of the invention additionally comprises a PLC honeypot connected via a communication line directly to the protection proxy module.

All the above and other characteristics and advantages of the invention will be further understood through the following illustrative and non-limitative description of embodiments thereof, with reference to the appended drawings.

### Brief Description of the Drawings

- Fig. 1 schematically shows the main components of a typical SCADA system;
- Fig. 2 schematically shows modules of the detection system of the invention and the flow of data between them when the EWS of the SCADA system has not been compromised by an attacker; and
- Fig. 3 schematically shows modules of the detection system of the invention and the flow of data between them when the EWS of the SCADA system has not been compromised by an attacker.

### Detailed Description of Embodiments of the Invention

The basic assumption behind the invention is that the attacker can already be on the Engineering Workstation or any other location in the network and is trying to send reprogramming files to the PLC or change/manipulate reprogramming files sent by the administrator via the Engineering Workstation.

In order to make it much more difficult for an attacker to change the operation of a PLC and destroy equipment connected to it, it is the purpose of the invention to identify when an Engineering workstation is trying to program the PLC without the operator's knowledge.

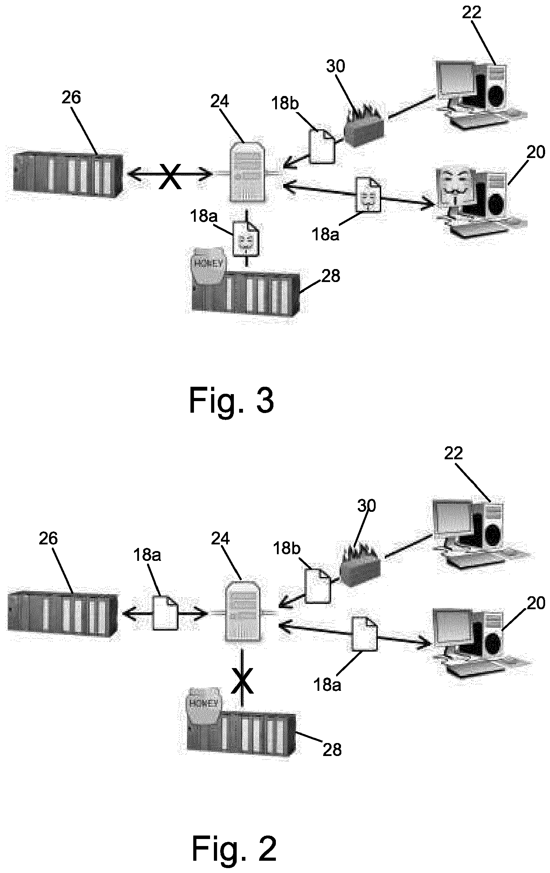

To achieve that end, two additional modules are installed on the SCADA system. In an embodiment of the invention, a third module can be added. The modules of the detection system and the communication connections between them are shown in Fig. 2 and Fig. 3 They are:
1. a standard Engineering Workstation (EWS) **20** - The EWS is part of the existing SCADA network.
2. a Baseline EWS called the Cryptographic Module (CM) **22** - The CM is installed behind a one way data diode **30** (one way hardware communication device) that isolates it from the SCADA network. The CM comprises software that computes a cryptographic signature on files used to program the PLC.
3. a protection proxy module **24** - The protection proxy module comprises software that intercepts and analyzes the incoming/outgoing communications from EWS **20** and CM **22** to the PLC **26**.
4. a PLC honeypot **28**.

Instead of transmitting directly to the PLC **26** both the EWS **20** and CM **22** transmit to a special protection proxy module **24** also located on the network. The detection method works as follows: First, the regular EWS **20** sends the programming files **18a** to proxy module **24**. Then, a local copy of these files is physically delivered to the isolated CM module **22**. A cryptographic signature is computed on the files by software in the CM module **22** and the encrypted file **18b** is transmitted to the proxy module **24**. That signature will be validated by the software in the proxy module **24**. If the signature matches the files sent from the EWS **20**, then the programming files **18a** are transmitted from the proxy module **22** to the PLC 26 without an alert as is schematically shown in Fig. 2.

In case the signature does not match, then this is an indication that files **18a** are either being sent by an attacker or have been corrupted by an attacker. In this case an alert is issued and the programming files **18a** are not transferred to the PLC **26** from the proxy module **24**, as is shown in Fig. 3. Optionally, in an embodiment of the invention as shown symbolically in Fig. 3, the files **18a** are diverted to a PLC honeypot/sandbox **28** for further monitoring, forensic data collection, and expert examination.

In essence, the standard EWS **20** serves as a honeypot to lure an attacker to try and program the PLC **26**. Since the attacker cannot view the signature computing server **22** on the network, there is only a slim chance that he will be able to manipulate it for its own purpose.

From an attacker's perspective the only way to bypass that detection system of the invention is by infecting physically the CM **22** and loading physically the reprogramming files.

Although embodiments of the invention have been described by way of illustration, it will be understood that the invention may be carried out with many variations, modifications, and adaptations, without exceeding the scope of the claims.

## Claims

1. A method of identifying when an Engineering Workstation (EWS) (20) in a Supervisory Control and Data Acquisition (SCADA) system is attempting to maliciously reprogram a Programmable Logic Controller (PLC) (26) without the operator's knowledge, the method comprising:
a. install in the network of the SCADA system, between the EWS (20) of the SCADA system and the PLC (26), a protection proxy module (24) that comprises software that is operative to analyze incoming/outgoing communications to the PLC (26) ;
b. connect directly to the protection proxy module (24), via a one way data diode (30), a Cryptographic Module (CM) (22) that comprises software that is operative to compute cryptographic signatures on files (18b);
c. send a programming file (18a) from the EWS (20) to the protection proxy module (24);
d. physically deliver a local copy of the programming file (18a) to the CM (22);
e. use the software in the CM (22) to compute a cryptographic signature on the file (18a) that was physically delivered from the EWS (20) to the CM (22) resulting in an encrypted file (18b);
f. transmit the encrypted file (18b) comprising the cryptographic signature from the CM (22) to the proxy module (24);
g. use the software in the proxy module (24) to validate the cryptographic signature on the encrypted file (18b) received from the CM (22) by checking if the cryptographic signature matches the programming file (18a) received from the EWS (20).

2. The method of claim 1, wherein if the software in the proxy module (24) determines that the cryptographic signature received from the CM (22) matches the programming file (18a) sent from the EWS (20), then the programming file (18a) is not malicious and the proxy module (24) transmits the programming file (18a) to the PLC (26).

3. The method of claim 1, wherein if the software in the proxy module (24) determines that the cryptographic signature received from the CM (22) does not match the programming file (18a) sent from the EWS (20), then the programming file (18a) is malicious and the proxy module (24) does not transmit the programming file (18a) to the PLC (26).

4. The method of claim 1, comprising the additional step of connecting a PLC honeypot (28) via a communication line directly to the protection proxy module (24).

5. The method of claim 4, wherein if the software in the proxy module (24) determines that the cryptographic signature received from the CM (22) does not match the programming file (18a) sent from the EWS (20), then the programming file (18a) is malicious and the proxy module (24) transmits the programming file (18a) to the PLC honeypot (28) for further monitoring, forensic data collection, and expert examination.

6. A system for identifying when an Engineering Workstation (EWS) (20) in a Supervisory Control and Data Acquisition (SCADA) system is attempting to maliciously reprogram a Programmable Logic Controller (PLC) (26) without the operator's knowledge, the system comprising:
a. an EWS (20) configured to prepare and transmit programming files (18a) via a communication channel to a PLC (26);
b. a PLC (26);
c. a communication channel between the EWS (20) and the PLC (26);
d. a protection proxy module (24) installed in the communication channel, the protection proxy module (24) comprising software that is operative to analyze incoming/outgoing communications to the PLC (26); and
e. a Cryptographic Module (CM) (22) connected via a one way data diode (30) to the protection proxy module (24), the CM (22) comprising software operative to compute cryptographic signatures on local copies of the programming files (18a) sent from the EWS (20) to the PLC (26) via the protection proxy module (24);
wherein the local copies of the programming files (18a) are physically delivered from the EWS (20) to the CM (22), and the CM (22) is configured to transmit encrypted files (18b) comprising the cryptographic signatures to the proxy module (24); and
wherein the software in the proxy module (24) is adapted to validate the signatures on the encrypted files (18b) comprising the cryptographic signatures received from the CM (22) by checking if the cryptographic signatures match the programming files (18a) received from the EWS (20).

7. The system of claim 6 additionally comprising a PLC honeypot (28) connected via a communication line directly to the protection proxy module (24).

## Patentansprüche

1. Verfahren zum Identifizieren, wenn eine Engineering Workstation (EWS) (20) in einem Supervisory Control and Data Acquisition (SCADA)-System versucht, einen Programmierbaren Logik-Controller (PLC) (26) ohne Wissen des Bedieners in bösartiger Absicht umzuprogrammieren, wobei das Verfahren Folgendes umfasst:
a. Installieren, in dem Netzwerk des SCADA-Systems, zwischen der EWS (20) des SCADA-Systems und dem PLC (26), eines Schutzproxymoduls (24), das Software umfasst, die dafür geeignet ist, ankommende/abgehende Kommunikationen zu dem PLC (26) zu analysieren;
b. direktes Verbinden, mit dem Schutzproxymodul (24) über eine Einweg-Datendiode (30), eines Kryptografie-Moduls (CM) (22), das Software umfasst, die dafür geeignet ist, kryptografische Signaturen auf Dateien (18b) zu berechnen;
c. Senden einer Programmierungsdatei (18a) von dem EWS (20) zu dem Schutzproxymodul (24);
d. physisches Übermitteln einer lokalen Kopie der Programmierungsdatei (18a) zu dem CM (22);
e. Verwenden der Software in dem CM (22) zum Berechnen einer kryptografischen Signatur auf der Datei (18a), die physisch von dem EWS (20) zu dem CM (22) übermittelt wurde, was eine verschlüsselte Datei (18b) zur Folge hat;
f. Senden der verschlüsselten Datei (18b), welche die kryptografische Signatur enthält, von dem CM (22) zu dem Proxymodul (24);
g. Verwenden der Software in dem Proxymodul (24) zum Validieren der kryptografischen Signatur auf der von dem CM (22) empfangenen verschlüsselten Datei (18b) durch Überprüfen, ob die kryptografische Signatur mit der (18a) von dem EWS (20) empfangenen Programmierungsdatei übereinstimmt.

2. Verfahren nach Anspruch 1, wobei, wenn die Software in dem Proxymodul (24) bestimmt, dass die von dem CM (22) empfangene kryptografische Signatur mit der von dem EWS (20) gesendeten Programmierungsdatei (18a) übereinstimmt, die Programmierungsdatei (18a) nicht bösartig ist, und das Proxymodul (24) die Programmierungsdatei (18a) zu dem PLC (26) sendet.

3. Verfahren nach Anspruch 1, wobei, wenn die Software in dem Proxymodul (24) bestimmt, dass die von dem CM (22) empfangene kryptografische Signatur nicht mit der von dem EWS (20) gesendeten Programmierungsdatei (18a) übereinstimmt, die Programmierungsdatei (18a) bösartig ist, und das Proxymodul (24) die Programmierungsdatei (18a) nicht zu dem PLC (26) sendet.

4. Verfahren nach Anspruch 1, das den zusätzlichen Schritt umfasst, einen PLC-Honeypot (28) über eine Kommunikationsleitung direkt zu dem Schutzproxymodul (24) zu verbinden.

5. Verfahren nach Anspruch 4, wobei, wenn die Software in dem Proxymodul (24) bestimmt, dass die von dem CM (22) empfangene kryptografische Signatur nicht mit der von dem EWS (20) gesendeten Programmierungsdatei (18a) übereinstimmt, die Programmierungsdatei (18a) bösartig ist, und das Proxymodul (24) die Programmierungsdatei (18a) zur weiteren Überwachung, forensischen Datenerfassung und Expertenuntersuchung zu dem PLC-Honeypot (28) sendet.

6. System zum Identifizieren, wenn eine Engineering Workstation (EWS) (20) in einem Supervisory Control and Data Acquisition (SCADA)-System versucht, einen Programmierbaren Logik-Controller (PLC) (26) ohne Wissen des Bedieners in bösartiger Absicht umzuprogrammieren, wobei das System Folgendes umfasst:
a. eine EWS (20), die dafür ausgestaltet ist, Programmierungsdateien (18a) vorzubereiten und über einen Kommunikationskanal an einen PLC (26) zu senden;
b. einen PLC (26);
c. einen Kommunikationskanal zwischen dem EWS (20) und dem PLC (26);
d. ein Schutzproxymodul (24), das in dem Kommunikationskanal installiert ist, wobei das Schutzproxymodul (24) Software umfasst, die dafür geeignet ist, die ankommenden/abgehenden Kommunikationen zu dem PLC (26) zu analysieren; und
e. ein Kryptografie-Modul (CM) (22), das über eine Einweg-Datendiode (30) mit dem Schutzproxymodul (24) verbunden ist, wobei das CM (22) Software umfasst, die dafür geeignet ist, kryptografische Signaturen auf lokalen Kopien der Programmierungsdateien (18a), die von dem EWS (20) über das Schutzproxymodul (24) zu dem PLC (26) gesendet werden, zu berechnen;
wobei die lokalen Kopien der Programmierungsdateien (18a) physisch von dem EWS (20) zu dem CM (22) übermittelt werden und das CM (22) dafür ausgestaltet ist, verschlüsselte Dateien (18b), welche die kryptografische Signatur enthalten, zu dem Proxymodul (24) zu senden; und
wobei die Software in dem Proxymodul (24) dafür ausgelegt ist, die Signaturen auf den verschlüsselten Dateien (18b), welche die kryptografischen Signaturen enthalten und die von dem CM (22) empfangen wurden, zu validieren, indem sie überprüft, ob die kryptografischen Signaturen mit den von dem EWS (20) empfangenen Programmierungsdateien (18a) übereinstimmen.

7. System nach Anspruch 6, das des Weiteren einen PLC-Honeypot (28) umfasst, der über eine Kommunikationsleitung direkt mit dem Schutzproxymodul (24) verbunden ist.

## Revendications

1. Procédé permettant d'identifier quand une Station de travail d'Ingénierie (EWS) (20) dans un système de Contrôle de Supervision et Acquisition de Données (SCADA) tente de reprogrammer de manière malveillante un Contrôleur à Logique Programmable (PLC) (26) à l'insu de l'opérateur, le procédé comprenant :
a. installer dans le réseau du système SCADA, entre l'EWS (20) du système SCADA et le PLC (26), un module proxy de protection (24) qui comprend un logiciel qui est fonctionnel pour analyser des communications entrantes/sortantes vers le PLC (26) ;
b. connecter directement au module proxy de protection (24), via une diode de données unidirectionnelle (30), un Module Cryptographique (CM) (22) qui comprend un logiciel qui est fonctionnel pour calculer des signatures cryptographiques sur des fichiers (18b) ;
c. envoyer un fichier de programmation (18a) de l'EWS (20) au module proxy de protection (24) ;
d. remettre physiquement une copie locale du fichier de programmation (18a) au CM (22) ;
e. utiliser le logiciel dans le CM (22) pour calculer une signature cryptographique sur le fichier (18a) qui a été remis physiquement de l'EWS (20) au (CM) (22) entraînant un fichier chiffré (18b) ;
f. transmettre le fichier chiffré (18b) comprenant la signature cryptographique du CM (22) au module proxy (24) ;
g. utiliser le logiciel dans le module proxy (24) pour valider la signature cryptographique sur le fichier chiffré (18b) reçu du CM (22) en vérifiant si la signature cryptographique correspond au fichier de programmation (18a) reçu de l'EWS (20).

2. Procédé selon la revendication 1, dans lequel si le logiciel dans le module proxy (24) détermine que la signature cryptographique reçue du CM (22) correspond au fichier de programmation (18a) envoyé depuis l'EWS (20), alors le fichier de programmation (18a) n'est pas malveillant et le module proxy (24) transmet le fichier de programmation (18a) au PLC (26).

3. Procédé selon la revendication 1, dans lequel si le logiciel dans le module proxy (24) détermine que la signature cryptographique reçue du CM (22) ne correspond pas au fichier de programmation (18a) envoyé depuis l'EWS (20), alors le fichier de programmation (18a) est malveillant et le module proxy (24) ne transmet pas le fichier de programmation (18a) au PLC (26).

4. Procédé selon la revendication 1, comprenant l'étape additionnelle consistant à connecter un pot de miel PLC (28) via une ligne de communication directement au module proxy de protection (24).

5. Procédé selon la revendication 4, dans lequel si le logiciel dans le module proxy (24) détermine que la signature cryptographique reçue du CM (22) ne correspond pas au fichier de programmation (18a) envoyé depuis l'EWS (20), alors le fichier de programmation (18a) est malveillant et le module proxy (24) transmet le fichier de programmation (18a) au pot de miel PLC (28) pour une surveillance supplémentaire, une collecte de données d'investigation, et un examen expert.

6. Système pour identifier quand une Station de travail d'Ingénierie (EWS) (20) dans un système de Contrôle de Supervision et Acquisition de Données (SCADA) tente de reprogrammer de manière malveillante un Contrôleur à Logique Programmable (PLC) (26) à l'insu de l'opérateur, le système comprenant :
a. une EWS (20) configurée pour préparer et transmettre des fichiers de programmation (18a) via un canal de communication à un PLC (26) ;
b. un PLC (26) ;
c. un canal de communication entre l'EWS (20) et le PLC (26) ;
d. un module proxy de protection (24) installé dans le canal de communication, le module proxy de protection (24) comprenant un logiciel qui est fonctionnel pour analyser des communications entrantes/sortantes vers le PLC (26) ; et
e. un Module Cryptographique (CM) (22) connecté via une diode de données unidirectionnelle (30) au module proxy de protection (24), le CM (22) comprenant un logiciel fonctionnel pour calculer des signatures cryptographiques sur des copies locales des fichiers de programmation (18a) envoyés de l'EWS (20) au PLC (26) via le module proxy de protection (24) ;
dans lequel les copies locales des fichiers de programmation (18a) sont remises physiquement de l'EWS (20) au CM (22), et le CM (22) est configuré pour transmettre des fichiers chiffrés (18b) comprenant les signatures cryptographiques au module proxy (24) ; et
dans lequel le logiciel dans le module proxy (24) est adapté pour valider les signatures sur les fichiers chiffrés (18b) comprenant les signatures cryptographiques reçues du CM (22) en vérifiant si les signatures cryptographiques correspondent aux fichiers de programmation (18a) reçus de l'EWS (20).

7. Système selon la revendication 6, comprenant additionnellement un pot de miel PLC (28) connecté via une ligne de communication directement au module proxy de protection (24).
